# DEMANDE DE BREVET EUROPEEN

(11) **EP 4 610 611 A1**
(43) Date de publication de la demande: **03.09.2025**
(21) Numéro de dépôt: 25158871.1
(22) Date de dépôt: 19.02.2025
(51) Int. Cl.: G01L 3/10

(54) **SYSTÈME DE DÉTERMINATION D'UNE INFORMATION DE ROTATION D'UN ORGANE**

(30) Priorité: 29.02.2024 FR 2402055
(71) Demandeur: NTN Europe, 74000 Annecy (FR)
(72) Inventeur: BAUDU, Alexandre, 74010 Annecy Cedex (FR); RUHLAND, Siegfried, 74010 Annecy Cedex (FR)
(74) Mandataire: Sayettat, Julien Christian

(57) **Abrégé**

L'invention concerne un système de détermination d'une information de rotation d'un organe (1) autour d'un axe (R) au moyen d'un dispositif comprenant un codeur (11, 12) porté par un corps (50) solidaire en rotation dudit organe, ledit codeur présentant une piste (11a, 12a) apte à émettre un signal périodique représentatif du déplacement en rotation dudit organe ; un capteur comprenant un motif sensible (15, 16) disposé à distance de lecture (d) de la piste (11a, 12a) pour délivrer l'information en fonction dudit déplacement ; ledit système comprenant un carter (17) dans lequel ledit organe est monté en rotation au moyen d'un palier (18) et, fixé dans le carter (17), un module (19) sur lequel le capteur est associé, le palier de guidage (18) étant porté par le module (19), une entretoise (26) de réglage de la distance de lecture (d) étant disposée entre le corps (50) et le palier de guidage (18).

## Description

L'invention concerne un système de détermination d'une information de rotation d'un organe autour d'un axe au moyen d'un dispositif comprenant un codeur et un capteur.

En particulier, le codeur est porté par un corps solidaire en rotation de l'organe, en présentant une piste apte à émettre un signal périodique représentatif du déplacement en rotation dudit organe, le capteur comprenant un motif sensible disposé à distance de lecture de la piste pour délivrer l'information de rotation en fonction dudit déplacement.

Selon une application particulière, le système permet la détermination d'un couple appliqué entre deux organes tournants, notamment intégrés dans une transmission d'un couple moteur à un véhicule, par exemple entre le moteur électrique ou le pédalier et la transmission mécanique d'un vélo à assistance électrique.

Pour ce faire, il est connu d'utiliser un corps d'épreuve présentant une section intérieure solidaire en rotation d'un organe, et une section extérieure s'étendant autour de la section intérieure en présentant des moyens d'accouplement dudit corps au deuxième organe, lesdites sections étant reliées de façon concentrique autour de l'axe par une structure déformable qui est agencée pour transmettre un couple entre les organes tout en autorisant un débattement angulaire entre lesdites sections en fonction du couple appliqué entre lesdits organes.

Un tel corps d'épreuve peut être instrumenté avec deux codeurs concentriques présentant chacun une piste. En particulier, chacune des pistes présente une succession de paires de pôles Nord et Sud pour former une piste magnétique multipolaire délivrant un signal magnétique pseudo-sinusoïdal.

Le capteur comprend deux motifs sensibles disposés respectivement à distance de lecture d'une piste, ledit capteur comparant les déplacements des sections pour déterminer le couple appliqué.

Les documents FR-2 816 051, FR-2 821 931 et FR-2 862 382 décrivent la comparaison de tels signaux pour déterminer un écart angulaire entre les sections, et donc le couple appliqué en ce qu'il induit ledit angle par torsion de la structure déformable.

Dans les systèmes connus, se pose le problème de réglage de la distance de lecture entre le motif sensible et la piste du codeur correspondant, qui doit être effectué de manière précise.

En particulier, pour la détermination du couple, la distance de lecture doit être stable et équivalente pour les deux capteurs, de manière à ne pas fausser la détermination.

L'invention a pour but d'améliorer l'art antérieur en proposant notamment un système de détermination permettant de fiabiliser la distance de lecture des motifs sensibles, et ce de façon particulièrement simple.

A cet effet, l'invention propose un système de détermination d'une information de rotation d'un organe autour d'un axe au moyen d'un dispositif comprenant :
- un codeur porté par un corps solidaire en rotation dudit organe, ledit codeur présentant une piste apte à émettre un signal périodique représentatif du déplacement en rotation dudit organe ;
- un capteur comprenant un motif sensible disposé à distance de lecture de la piste pour délivrer l'information en fonction dudit déplacement ;
ledit système comprenant un carter dans lequel ledit organe est monté en rotation au moyen d'un palier de guidage et, fixé dans le carter, un module sur lequel le capteur est associé, le palier de guidage étant porté par le module, une entretoise de réglage de la distance de lecture étant disposée entre le corps portant le codeur et ledit palier.

D'autres objets et avantages de l'invention apparaîtront dans la description qui suit, faite en référence aux figures annexées, dans lesquelles :
[Fig.1] est une représentation partielle en perspective éclatée du pédalier d'un vélo à assistance électrique équipé d'un système selon l'invention pour déterminer le couple de rotation entre deux organes tournant autour d'un axe de rotation ;
[Fig.1a] montre l'assemblage du palier à roulement dans le module ;
[Fig.2] est une représentation en perspective et en coupe axiale du module de la figure 1 ;
[Fig.3] représente en perspective éclatée l'assemblage du capteur sur le module des figures précédentes ;
[Fig.4] représente en perspective éclatée le montage dans le carter de l'ensemble module / palier / capteur des figures précédentes ;
[Fig.5] représente en coupe axiale partielle le pédalier de vélo à assistance électrique équipé du système de détermination des figures précédentes ;
[Fig.5a],

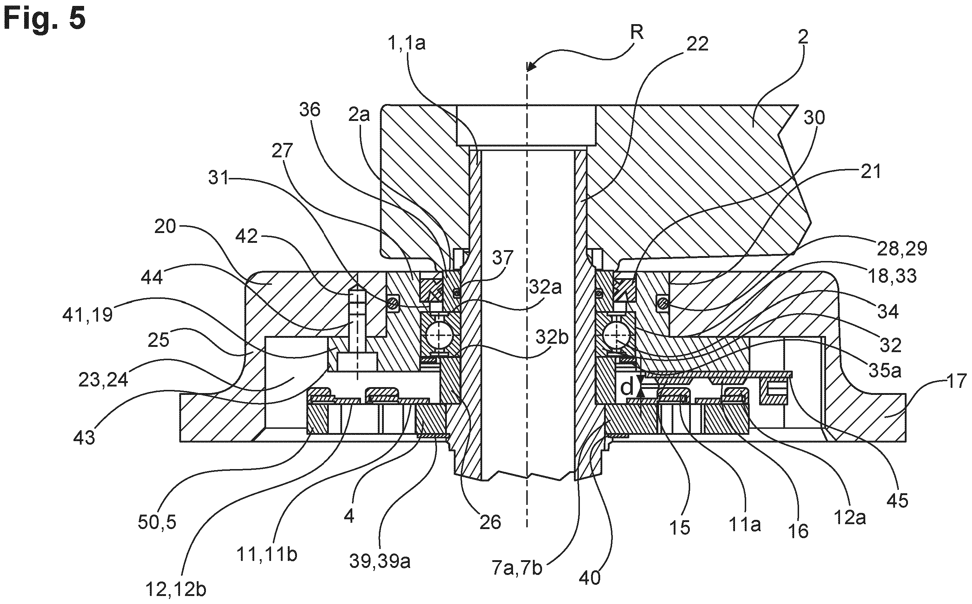

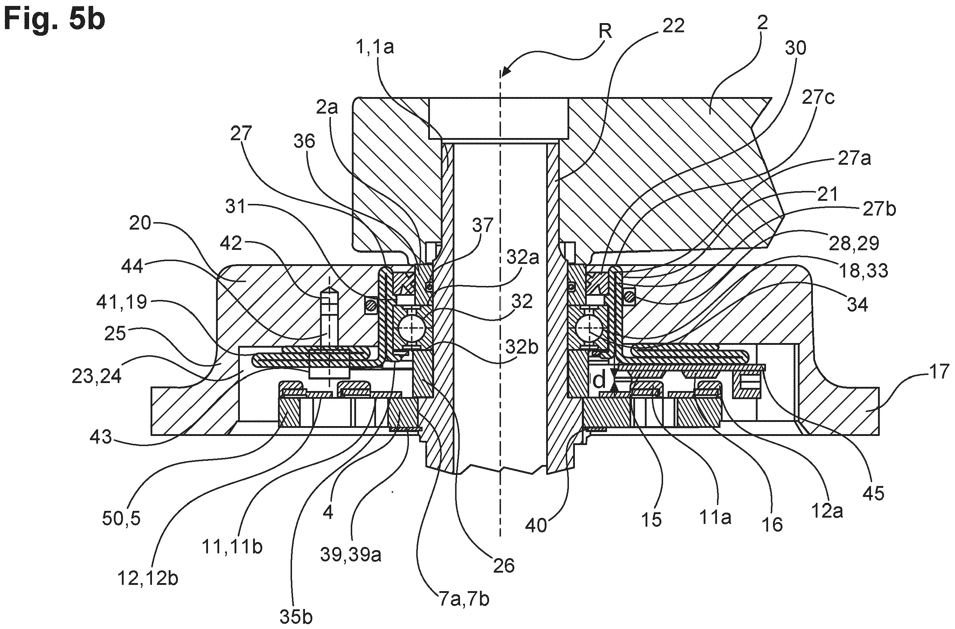

[Fig.5b] et

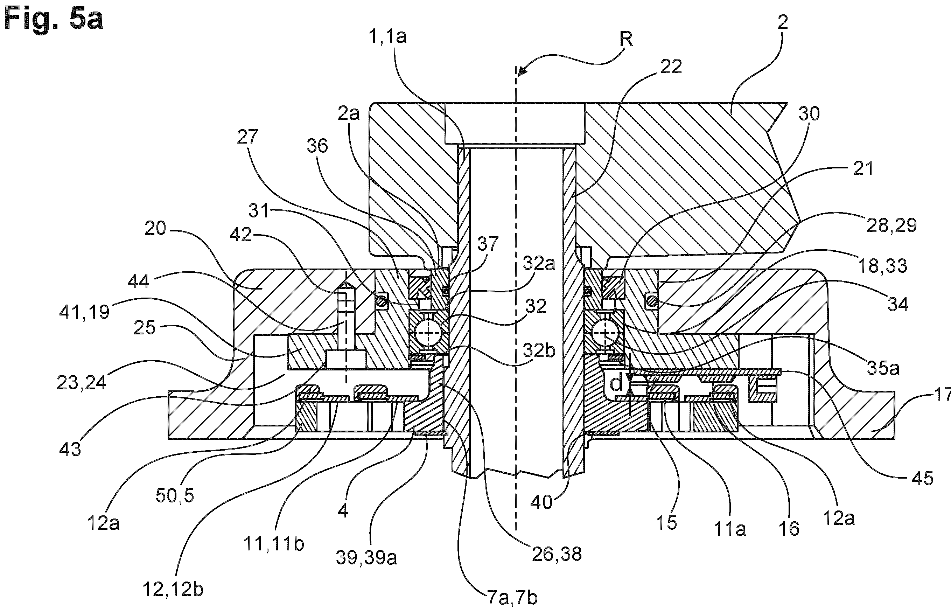

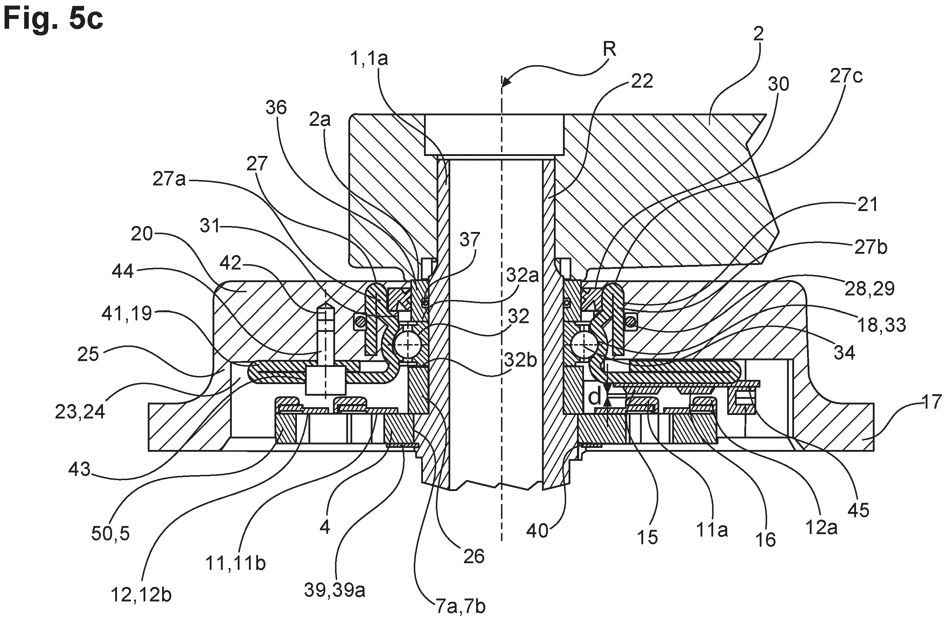

[Fig.5c] représentent, suivant une vue similaire à la figure 5, un pédalier de vélo à assistance électrique équipé d'un système de détermination suivant respectivement une variante de réalisation de l'invention.

En relation avec ces figures, on décrit ci-dessous un système de détermination d'une information de rotation d'un organe 1 autour d'un axe R.

Dans cette description, les termes de positionnement dans l'espace sont pris en référence à l'axe R de rotation. En particulier, les termes « intérieur » et « extérieur » sont relatifs à une disposition respectivement proche et à distance de cet axe R, et les termes « axial » et « radial » sont relatifs à une disposition respectivement suivant cet axe R et s'éloignant ou se rapprochant de lui. Par ailleurs, les termes « interne » et « externe » sont relatifs à une disposition respectivement d'un côté et de l'autre selon l'axe R, notamment vers le bas et vers le haut sur les figures 5.

Selon une application particulière, le système permet la détermination d'un couple appliqué entre deux organes 1 tournant autour de l'axe R, lesdits organes étant intégrés dans une transmission d'un couple moteur à un véhicule, par exemple au niveau du pédalier d'un vélo à assistance électrique.

Selon d'autres applications, le système permet la détermination d'informations différentes telles que la position ou la vitesse de rotation d'un organe tournant.

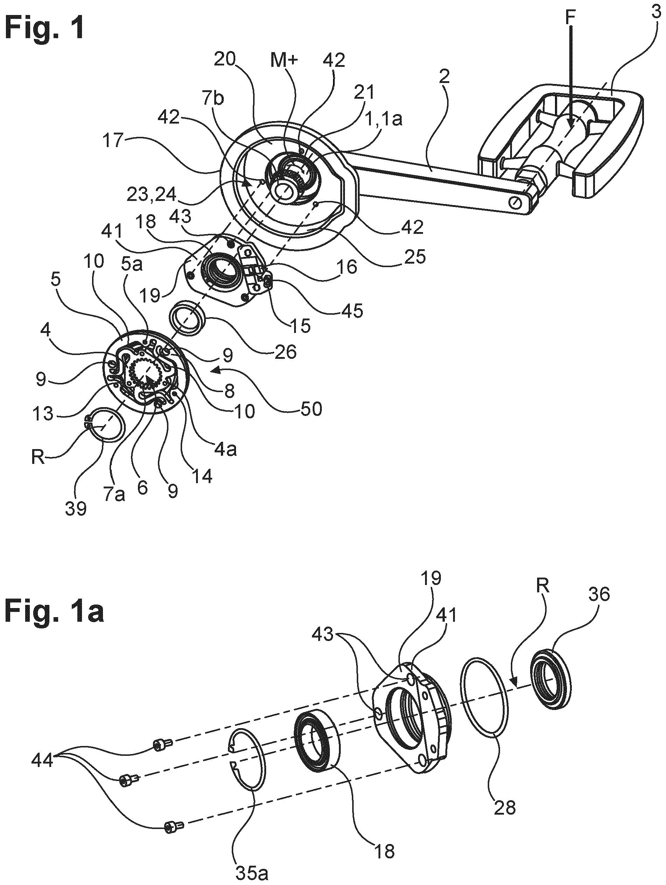

Selon la réalisation représentée, l'un des organes 1 est équipé d'une pièce 2 d'actionnement de sa rotation. En particulier, la figure 1 représente un pédalier d'un vélo à assistance électrique comprenant une manivelle 2 équipée d'une pédale 3, ladite manivelle étant montée sur un arbre 1a entraîné en rotation selon l'axe R pour former un organe 1 d'application d'un couple de pédalage M+ suivant le sens de pédalage.

Le système comprend un corps d'épreuve 50 qui permet de transmettre le couple de pédalage M+ au deuxième organe. En particulier, le deuxième organe peut comprendre un manchon disposé de manière concentrique autour de l'arbre 1a, ledit manchon étant par exemple lié à un porte satellite d'un train épicycloïdal d'une boîte de vitesse motorisée, en exerçant un couple de rotation orienté suivant une direction inverse de celle du couple de pédalage M+.

Dans cette application, l'effort de pédalage F en bout de pédale 3 à considérer suivant la norme EN15194 : 2017 est de 1 500 N qui, avec une longueur de manivelle 2 de 165 mm, engendre un couple de pédalage M+ de l'ordre de 250 Nm. En particulier, le couple à transmettre par le corps d'épreuve n'est que dans un sens de rotation (celui représenté par la flèche M+ sur les figures), dans la mesure où l'autre sens correspond à la roue libre du vélo.

Le corps d'épreuve 50 présente une section intérieure 4 solidaire en rotation du premier organe 1, ainsi qu'une section extérieure 5 s'étendant autour de la section intérieure 4 en présentant des moyens d'accouplement dudit corps d'épreuve au deuxième organe.

En relation avec les figures, la section intérieure 4 présente un alésage 6 équipé des moyens d'accouplement sur l'arbre 1a, notamment sous forme de cannelures 7a agencées pour s'engager avec des nervures complémentaires 7b formées circonférentiellement et en relief sur la périphérie dudit arbre.

S'agissant de l'accouplement au deuxième organe, la figure 1 représente une section extérieure 5 dont la paroi circonférentielle intérieure présente au moins un lobe radial 8 qui est équipé d'un moyen 9 de fixation de ladite section extérieure sur un manchon dudit deuxième organe, tel que décrit précédemment. En particulier, trois lobes 8 à 120° sont prévus, chacun d'eux présentant un orifice 9 de fixation, notamment par une goupille ou par vissage dans un orifice complémentaire d'un tel manchon.

Les sections 4, 5 sont reliées de façon concentrique autour de l'axe R par une structure déformable qui est agencée pour transmettre un couple entre les organes, tout en autorisant un débattement angulaire entre lesdites sections, en fonction du couple appliqué entre lesdits organes.

En particulier, le couple résultant des couples de pédalage M+ sur la section intérieure 4 et du couple appliqué par le deuxième organe sur la section extérieure 5 induit une torsion entre les sections 4, 5, et donc un déplacement angulaire relatif desdites sections suivant un angle de torsion qui est fonction dudit couple.

Dans les modes de réalisation représentés, la structure déformable comprend un ensemble de branches 10 réparties angulairement entre les sections 4, 5. En particulier, les branches 10 et les sections 4, 5 sont formées d'une seule pièce, notamment par emboutissage et/ou par découpage d'un flan en matériau métallique.

Les branches 10 sont inclinées dans le sens inverse de la rotation, ce qui engendre un bras de levier qui, en sollicitant les branches 10 en traction, réduit les contraintes d'une manière très efficace avec comme contrepartie une augmentation de la raideur.

Sur la figure 1, le corps d'épreuve 50 comprend trois branches 10 qui présentent chacune une géométrie courbe agencée pour garantir un effet de bras de levier efficace tout en présentant un encombrement radial réduit, les lobes 8 s'étendant chacun radialement dans un coude extérieur de respectivement une branche 10.

Le système comprend un dispositif de détermination de l'angle entre les sections 4, 5 qui, notamment en tenant compte de la raideur de la structure déformable, est fonction du couple appliqué.

Pour ce faire, le dispositif comprend deux codeurs concentriques portés par respectivement une section 4, 5 du corps d'épreuve 50, parmi lesquels un codeur intérieur 11 - respectivement extérieur 12 - solidaire en rotation de la section intérieure 4 - respectivement extérieure 5 -, en présentant chacun une piste 11a, 12a apte à émettre un signal représentatif du déplacement en rotation de respectivement un organe 1.

Selon d'autres d'applications, le corps 50 peut être équipé d'un ou de plusieurs codeur 11, 12 pour déterminer une information de rotation de l'organe 1, telle que de position ou de sa vitesse de rotation.

Dans le mode de réalisation représenté, chaque codeur 11, 12 est fixé à respectivement une section 4, 5 et porte une piste magnétique respectivement intérieure 11a et extérieure 12a qui est apte à émettre un signal périodique représentatif du déplacement en rotation de la section 4, 5 correspondante.

Chacune des codeurs 11, 12 est porté par une armature respectivement intérieure 11b et extérieure 12b, la section intérieure 4 - respectivement extérieure 5 - présentant des moyens de fixation de l'armature intérieure 11b - respectivement extérieure 12b - sur elle, notamment sous la forme d'orifices 4a, 5a de vissage ou de rivetage.

En relation avec la figure 1, la section intérieure 4 présente une paroi circonférentielle extérieure pourvue de trois lobes radiaux 13, et la section extérieure 5 présente trois lobes radiaux 14 qui sont formés sur sa paroi circonférentielle intérieure en étant décalés angulairement des lobes 8 de fixation au deuxième organe, chaque section 4, 5 présentant trois orifices 4a, 5a de fixation disposés à 120° les uns des autres en étant formés sur chacun des lobes 13, 14.

Selon une réalisation, une succession de paires de pôles Nord et Sud est aimantée sur respectivement un codeur 11, 12 pour former une piste magnétique multipolaire 11a, 12a apte à émettre un signal magnétique de forme pseudo-sinusoïdale.

Les codeurs 11, 12 peuvent comprendre chacun une matrice annulaire, par exemple réalisée à base d'un matériau plastique ou élastomère, dans laquelle sont dispersées des particules magnétiques, notamment des particules de ferrite ou de terres rares comme le NdFeB, lesdites particules étant aimantées pour former les pistes magnétiques 11a, 12a.

Le dispositif de détermination comprend en outre un capteur comprenant au moins deux motifs sensibles respectivement intérieur 15 et extérieur 16 disposés chacun à distance de lecture d de la piste respectivement intérieure 11a et extérieure 12a pour délivrer l'information de rotation de l'organe 1 correspondant en fonction de son déplacement.

Dans les modes de réalisation représentés, chaque motif sensible 15, 16 est agencé pour délivrer un signal représentatif de la position angulaire du codeur 11, 12 correspondant, et le capteur utilise lesdits signaux pour comparer les déplacements des sections 4, 5 correspondantes, afin de déterminer un écart angulaire entre lesdites sections, qui est fonction du couple appliqué.

Selon une réalisation, chaque motif 15, 16 peut comprendre au moins deux éléments sensibles, notamment une pluralité d'éléments sensibles alignés, tel que décrit dans les documents FR-2 792 403, EP-2 602 593 et EP-2 602 594.

Les éléments sensibles peuvent être à base d'un matériau magnétorésistif dont la résistance varie en fonction du signal magnétique de la piste 11a, 12a à détecter, par exemple de type AMR, TMR ou GMR, ou d'une sonde à effet Hall.

Selon une réalisation, la position angulaire peut être déterminée de façon incrémentale au moyen du signal émis par une piste magnétique 11a, 12a. En particulier, les motifs sensibles 15, 16 peuvent être agencés pour délivrer des signaux carrés incrémentaux en quadrature, le capteur comprenant des moyens de comparaison qui présentent des moyens de comptage indiquant la position angulaire de chacun des codeurs 11, 12, ainsi que des moyens de soustraction permettant de calculer la différence entre lesdites positions angulaires, notamment tels que décrit dans les documents FR-2 816 051, FR-2 821 931 et FR-2 862 382.

Selon une réalisation, la position angulaire peut être déterminée de façon absolue, c'est-à-dire par rapport à une position de référence, en prévoyant une piste magnétique secondaire ou un codage spécifique sur la rondelle d'un codeur 11, 12, un motif du capteur pouvant être disposé à distance de lecture d de ladite piste ou dudit codage.

En relation avec les figures, le système de détermination comprend en outre un carter 17 dans lequel l'organe 1 est monté en rotation au moyen d'un palier de guidage 18 et, fixé dans le carter 17, un module 19 sur lequel le capteur est associé.

En particulier, le carter 17 comprend une paroi externe 20 pourvue d'un alésage 21 au travers duquel l'arbre tournant 1a est monté en rotation au moyen du palier 18, ledit arbre tournant présentant un embout 22 saillant de ladite paroi externe qui est équipé de la manivelle 2 d'application d'un couple de pédalage M+.

Le carter 17 présente une cavité 23 formant un logement 24 dans lequel le module 19 et le corps d'épreuve 50 sont disposés. Sur les figures, la paroi externe 20 du carter 17 est entourée d'une jupe 25 qui délimite le logement 24, le module 19 et le capteur étant disposés dans ledit logement en étant entourés circonférentiellement par ladite jupe, de manière à être intégralement contenus à l'intérieur dudit carter.

Par ailleurs, le palier de guidage 18 est porté par le module 19, et une entretoise 26 de réglage de la distance de lecture d est disposée entre le corps d'épreuve 50 et ledit palier.

Cet agencement permet de fiabiliser la distance de lecture d et donc la précision des signaux délivrés, dans la mesure où il permet de définir le positionnement entre le palier 18 et les motifs sensibles 15, 16 par rapport au module 19, le positionnement des pistes 11a, 12a par rapport au corps 50, et la distance d directement par la longueur de l'entretoise 26.

Dans les réalisations représentées, le module 19 comprend un fût 27 qui présente une paroi extérieure disposée dans l'alésage 21 et une paroi intérieure portant le palier 18 de guidage.

Pour empêcher d'une part les fuites de lubrifiant disposés à l'intérieur du logement 24 du carter 17, et d'autre part la pénétration dans ledit logement de polluants extérieurs tels que de l'eau, de la poussière et/ou de la boue, la paroi extérieure du fût 27 est équipée d'un élément d'étanchéité 28 de son interface avec l'alésage 21.

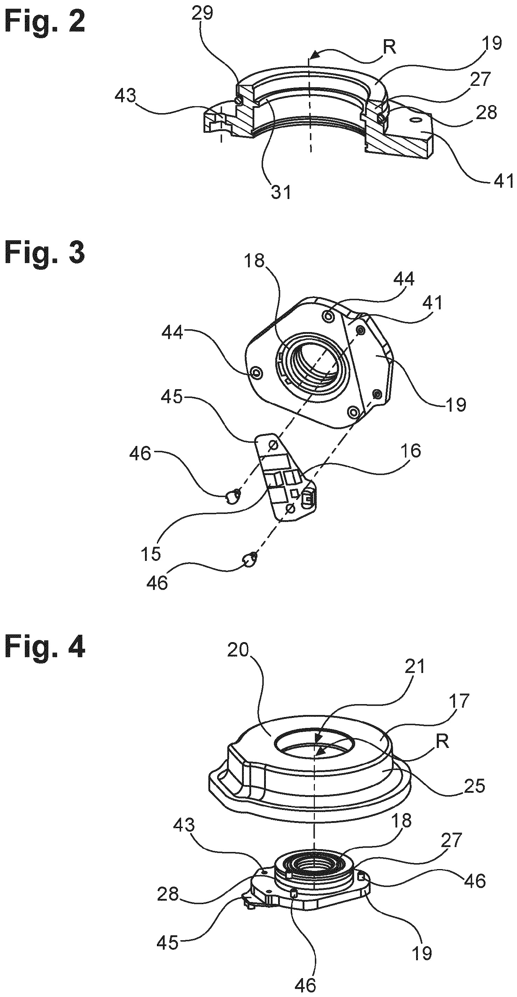

Dans les modes de réalisation représentés, le système comprend un joint torique 28 qui est disposé dans une gorge annulaire 29 formée à cet effet sur la paroi extérieure du fût 27 (figures 2, 5, 5a) et/ou sur la paroi intérieure de l'alésage 21 (figures 5b, 5c), afin d'assurer l'étanchéité de l'interface entre le module 19 et ledit alésage.

De même, la paroi intérieure du fût 27 est équipée d'un élément d'étanchéité annulaire 30 de son interface avec l'organe 1, ledit élément d'étanchéité reposant axialement sur un rebord annulaire 31 formé à cet effet sur ladite paroi intérieure.

Sur les figures 5 et 5a, le module 19 est formé par moulage, notamment d'un matériau polymère. Sur les figures 5b et 5c, le module 19 est formé par emboutissage d'une plaque de tôle en matériau métallique, le fût 27 étant formé par deux parois axiales intérieure 27a et extérieure 27b reliées entre elles par un repli externe 27c.

Le palier de guidage 18 comprend une bague intérieure 32 montée autour de l'organe 1 et une bague extérieure 33 portée par le module 19, des corps roulants, notamment sous forme de billes 34, étant disposés entre lesdites bagues pour guider leur rotation relative.

Sur les figures 5, 5a, 5b, la bague extérieure 33 est associée sur une paroi du module, notamment au moyen d'une rondelle 35a de type « circlip » (figures 5, 5a) ou au moyen d'un repli radial intérieur 35b formé par emboutissage d'une extrémité interne de la paroi intérieure 27a (figure 5b).

Sur la figure 5c, le module 19 présente une paroi, notamment la paroi intérieure 27a de son fût 27, qui forme elle-même la bague extérieure 33. Pour ce faire, piste de roulement extérieure des billes 34 est formée par emboutissage dans la paroi intérieure 27a, et le rebord annulaire 31 est formé sur une partie externe de ladite piste.

La bague intérieure 32 est associée par emmanchement autour de l'arbre 1a, et présente une paroi externe 32a qui est maintenue axialement sur ledit arbre. En particulier, la manivelle 2 présente une butée axiale 2a sur laquelle la paroi externe 32a est en appui, éventuellement par l'intermédiaire d'un anneau 36 disposé entre ladite butée et ladite paroi.

De façon avantageuse, l'anneau 36 est emmanché sur l'arbre 1a avec interposition d'un élément d'étanchéité, notamment sous la forme d'un joint torique 37.

L'entretoise 26 est disposée en appui axial contre une paroi interne 32b de la bague intérieure 32. Sur les figures 5, 5b et 5c, l'entretoise 26 est disposée en appui axial contre une paroi externe du corps 50, ainsi que sur une paroi radiale formée en partie externe des nervures 7b d'engrenage de l'arbre 1a avec ledit corps.

Sur la figure 5a, l'entretoise 26 est formée d'une seule pièce avec le corps 50, qui présente à cet effet un nez 38 s'étendant axialement pour former ladite entretoise. En variante, la bague intérieure 32 peut présenter un nez analogue pour former l'entretoise 26 et/ou ladite entretoise peut comprendre un épaulement formé autour de l'arbre 1a.

En relation avec les figures, le corps 50 présente une paroi interne 39a qui est maintenue axialement sur l'organe 1 au moyen d'une rondelle 39.

En particulier, la rondelle 39 est une rondelle élastique de type « circlip » montée dans une gorge annulaire 40 formée en périphérie sur l'arbre tournant 1a, et est agencée pour appliquer un effort axial de plaquage de l'entretoise 26 sur le palier de guidage 18.

Sur les figures, le module 19 présente en outre un plateau 41 qui s'étend radialement, en présentant une paroi interne sur laquelle est fixé le capteur.

De façon avantageuse, le plateau 41 est fixé par vissage dans des orifices borgnes 42 du carter 17. Cet agencement permet de laisser la paroi externe 20 du carter 17 libre de tout élément de fixation saillant, afin d'éviter tout risque de collision avec la manivelle 2, mais également pour éviter les risques de fuite de lubrifiant et/ou d'entrée de polluants extérieurs par d'éventuels orifices traversant ladite paroi externe. Par ailleurs, le capteur est ainsi positionné d'une manière précise en référence à l'axe de rotation R par la fixation directement dans le carter 17, notamment en disposant le plan des motifs sensibles 15, 16 perpendiculairement à l'axe R.

Sur les figures, le plateau 41 comprend trois orifices 43 équirépartis angulairement pour permettre sa fixation à la paroi externe 20 au moyen de vis 44 appropriées.

Le capteur est implanté sur une carte 45 d'un circuit imprimé, ladite carte étant fixée au module 19. En particulier, la carte 45 est fixée par deux vis 46 sur la paroi interne du plateau 41.

Dans le cas d'un module 19 formé par emboutissage d'une tôle en matériau métallique (figures 5b, 5c), le plateau 41 est formé par empilement axial d'au moins deux parois reliées par des replis, afin de garantir audit plateau une épaisseur qui est suffisante pour assurer sa rigidité, notamment par rapport au vissage dans le carter 17 et/ou au vissage de la carte 45 du capteur. En outre, cette réalisation permet d'avoir suffisamment de longueur taraudée pour les vis de fixation de la carte électronique 45, tout en restant en retrait des codeurs 11, 12.

## Revendications

1. Système de détermination d'une information de rotation d'un organe (1) autour d'un axe (R) au moyen d'un dispositif comprenant :
- un codeur (11, 12) porté par un corps (50) solidaire en rotation dudit organe, ledit codeur présentant une piste (11a, 12a) apte à émettre un signal périodique représentatif du déplacement en rotation dudit organe ;
- un capteur comprenant un motif sensible (15, 16) disposé à distance de lecture (d) de la piste (11a, 12a) pour délivrer l'information en fonction dudit déplacement ;
ledit système comprenant un carter (17) dans lequel ledit organe est monté en rotation au moyen d'un palier de guidage (18) et, fixé dans le carter (17), un module (19) sur lequel le capteur est associé, ledit système étant **caractérisé en ce que** le palier de guidage (18) est porté par le module (19), et **en ce qu'**une entretoise (26) de réglage de la distance de lecture (d) est disposée entre le corps (50) et le palier de guidage (18).

2. Système de détermination selon la revendication 1, **caractérisé en ce que** le carter (17) comprend un alésage (21) dans lequel l'organe (1) est monté en rotation, le module (19) présentant un fût (27) présentant une paroi extérieure disposée dans ledit alésage et une paroi intérieure portant le palier de guidage (18).

3. Système de détermination selon l'une des revendications 1 ou 2, **caractérisé en ce que** le palier de guidage (18) comprend une bague intérieure (32) montée autour de l'organe (1) et une bague extérieure (33) portée par le module (19), des corps roulants (34) étant disposés entre lesdites bagues pour guider leur rotation relative.

4. Système de détermination selon la revendication 3, **caractérisé en ce que** la bague extérieure (33) est associée sur une paroi du module (19).

5. Système de détermination selon la revendication 3, **caractérisé en ce que** le module (19) présente une paroi (27a) formant la bague extérieure (33).

6. Système de détermination selon l'une quelconque des revendications 3 à 5, **caractérisé en ce que** l'entretoise (26) est disposée en appui axial contre une paroi interne (32b) de la bague intérieure (32).

7. Système de déterminations selon l'une quelconque des revendications 3 à 6, **caractérisé en ce que** la bague intérieure (32) présente une paroi externe (32a) qui est maintenue axialement sur l'organe (1).

8. Système de détermination selon l'une quelconque des revendications 1 à 7, **caractérisé en ce que** l'entretoise (26) est disposée en appui axial contre une paroi externe du corps (50).

9. Système de détermination selon l'une quelconque des revendications 1 à 8, **caractérisé en ce que** le corps (50) présente un nez (38) s'étendant axialement pour former l'entretoise (26).

10. Système de détermination selon l'une quelconque des revendications 1 à 9, **caractérisé en ce que** le corps (50) présente une paroi interne (39a) qui est maintenue axialement sur l'organe (1) au moyen d'une rondelle (39).

11. Système de détermination selon l'une quelconque des revendications 1 à 10, **caractérisé en ce que** le module (19) présente un plateau (41) s'étendant radialement, ledit plateau présentant une paroi interne sur laquelle le capteur est fixé.

12. Système de détermination selon la revendication 11, **caractérisé en ce que** le plateau (41) est fixé par vissage dans des orifices borgnes (42) du carter (17).

13. Système de détermination selon l'une quelconque des revendications 1 à 13, **caractérisé en ce que** le capteur est implanté sur une carte (45) d'un circuit imprimé, ladite carte étant fixée au module (19).

14. Système de détermination selon l'une quelconque des revendications 1 à 13, **caractérisé en ce que** le corps (50) porte deux codeurs concentriques (11, 12) présentant chacun une piste (11a, 12a), le capteur comprenant au moins deux motifs sensibles (15, 16) disposés respectivement à distance de lecture (d) d'une piste (11a, 12a).

15. Système de détermination selon la revendication 14, **caractérisé en ce que** le corps (50) présente une section intérieure (4) solidaire en rotation de l'organe (1), et une section extérieure (5) s'étendant autour de la section intérieure (4) en présentant des moyens (9) d'accouplement dudit corps à un deuxième organe, lesdites sections étant reliées de façon concentrique autour de l'axe (R) par une structure déformable (10) qui est agencée pour transmettre un couple entre les organes (1) tout en autorisant un débattement angulaire entre lesdites sections en fonction du couple appliqué entre lesdits organes, les codeurs (11, 12) étant respectivement portés par une section (4, 5) et le capteur comparant les déplacements desdites sections pour déterminer le couple appliqué.
